# EUROPEAN PATENT APPLICATION

(11) **EP 0 637 816 A1**
(43) Date of publication of application: **08.02.1995**
(21) Application number: 93112421.8
(22) Date of filing: 03.08.1993
(51) Int. Cl.: G09B 5/06

(54) **Phonic book**

(71) Applicant: Li, Yi-Yang, Hsinchu City (TW)
(72) Inventor: Li, Yi-Yang, Hsinchu City (TW)
(74) Representative: Kador & Partner

(57) **Abstract**

A phonic book includes a speaking device mounted to a book. The speaking device has a phonetic integrated circuit chip which has memory built therein to store in each segment thereof the content of a page of the book. A page number code is attached to each page of the book to be contactingly engageable by a page number identifying arm in electrical connection with the phonetic integrated circuit via a number of address lines to provide an address signal associated with the page number to the phonetic integrated circuit chip. This allows the phonetic integrated circuit chip to access a specific memory segment associated with the page number, to read the content of the memory segment and to broadcast the content by a speaker.

## Description

### FIELD OF THE INVENTION

The present invention relates generally to a phonic book with sound speaking device for automatically reading out the contents of the book and a page number identifying device for selecting specific page to be read out.

### BACKGROUND OF THE INVENTION

Currently, the commercially available phonic books include a separate recording medium, such as a cassette tape, for recording the contents of the books therein in advance to allow a reader to play back in reading the books. Such a conventional manner to provide audio signals of the contents of the books is inconvenient in that in general, the reader has no way to selectively read a specific section or page of the book directly for it is difficult for the reader to locate that section or page in the cassette tape by using a regular tape player.

It is therefore desirable to provide an phonic book which has a page number identifying device incorporated therein to selectively read out specific pages of a book by a speaking device.

### SUMMARY OF THE INVENTION

It is therefore the principal objective of the present invention to provide a phonic book which has a page identifying device incorporated therein to allow a reader to identify the portion of the content of the book stored in storing device to be read out.

It is also an objective of the present invention to provide a phonic book which has a page identifying device to allow the reader, particularly young children, to listen to the content of a selected page of the book.

It is also an objective of the present invention to provide a phonic book which has a page identifying device to allow the blind to touch and listen to the content of a specific page of a braille book.

To achieve the above objectives, there is provided a phonic book comprising a speaking device mounted to a book. The speaking device has a phonetic integrated circuit chip which has memory built therein to store in each segment thereof the content of a page of the book. A page number code is attached to each page of the book to be contactingly engageable by a page number identifying arm in electrical connection with the phonetic integrated circuit via a number of address lines to provide an address signal associated with the page number to the phonetic integrated circuit chip. This allows the phonetic integrated circuit chip to access a specific memory segment associated with the page number, to read the content of the memory segment and to broadcast the content by a speaker.

Apparently, the present invention provides the following advantages:
(1) The phonic book of the present invention is a single article which integrates the audio record of the content of the book into a storage device which is mounted on the book so that no separate audio record used in the conventional phonic books is needed.
(2) The audio play-back of the content of the book is synchronous with the turning of the pages of the phonic book of the present invention while in the conventional phonic books, a reader has to turn the pages in accordance with the speed of play-back of the play-back device.
(3) Due to the synchronization of the page turning and the audio play-back, a one step procedure is enough to operate the phonic book of the present invention, while the conventional phonic books require separately operate the play-back device and opening the book.
(4) The phonic book of the present invention allows the reader to repeat the content of a specific page very easily while in the conventional phonic books, the reader has to rewind the recording tape for playing back the same page again.
(5) Due to the above advantages, it is also possible to provides control buttons to form an interactive communication between the phonic book of the present invention and the reader.

### BRIEF DESCRIPTION OF THE DRAWINGS

The present invention will be better understood from the following description of a preferred embodiment of the present invention, with reference to the attached drawings, wherein:
Fig. 1 is a perspective view showing a phonic book with a page identifying device incorporated therein in accordance with the present invention;
Fig. 2 is a top plan view showing the speaking device incorporated in the phonic book of the present invention with a portion of the casing thereof broken to shown the inside structure thereof;
Fig. 3 is a circuit diagram of the phonic book of the present invention;
Fig. 4 is a perspective view showing the reading of the page number code formed on each page of the phonic book of the present invention;
Fig. 5 is examples of the page number codes.

### DETAILED DESCRIPTION OF THE PREFERRED EMBODIMENT

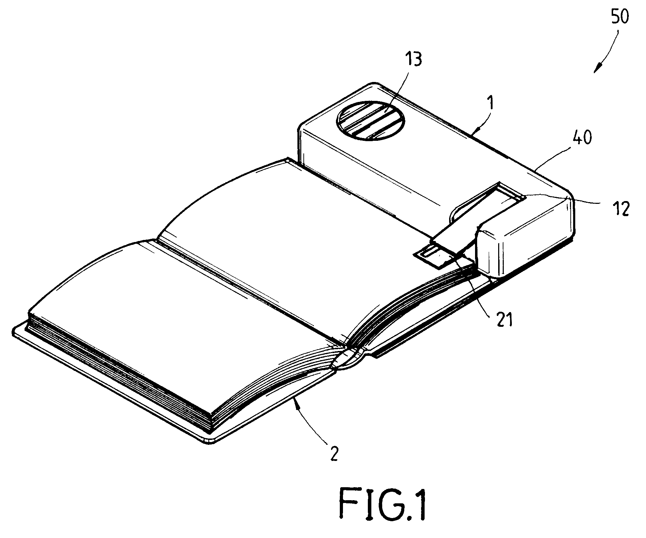

With reference to the drawings and in particular to Fig. 1, wherein a phonic book constructed in accordance with the present invention, generally designated by the reference numeral 50, is shown, the phonic book 50 comprises a book portion 2 on which speaking means 1 is incorporated. The speaking means 1 may be disposed juxtaposing to the book portion 2 as shown in the drawings or in other ways.

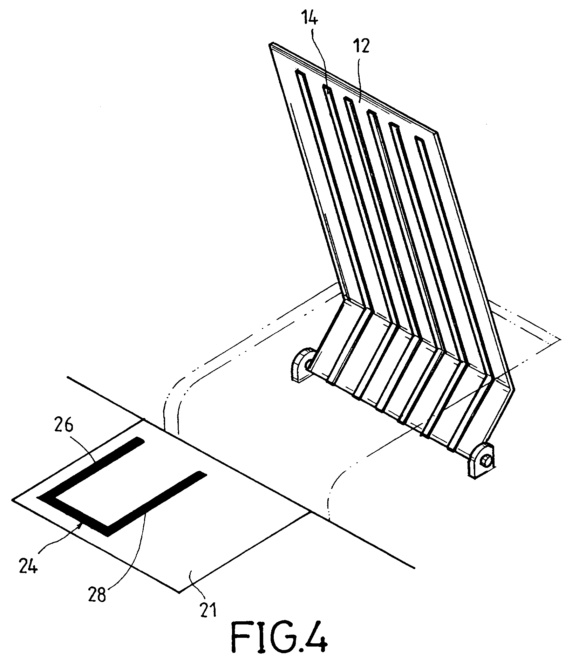

As shown, the speaking means 1 has a page number identifying arm 12 pivotally connected thereto to contactingly engage a page number code 21 formed on each page of the book 2. The detail of the page number identifying arm 12 is shown in Fig. 4 in which the page number identifying arm 12 is rotated away from the current page of the book 2 to allow a reader to turn to next page.

A speaker 13 which may be one familiar to those having ordinary skill is provided to broadcast the content of the page which is stored within the speaking means 1 in accordance with the page number code detected by the page number identifying arm 12.

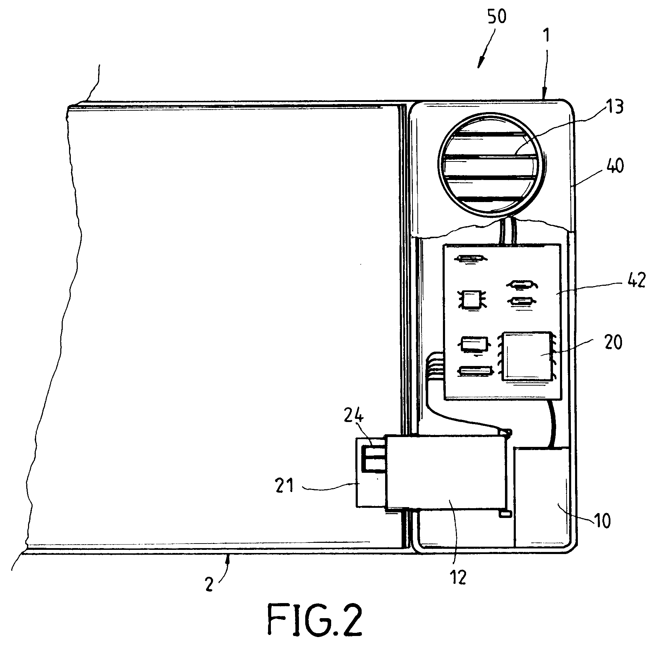

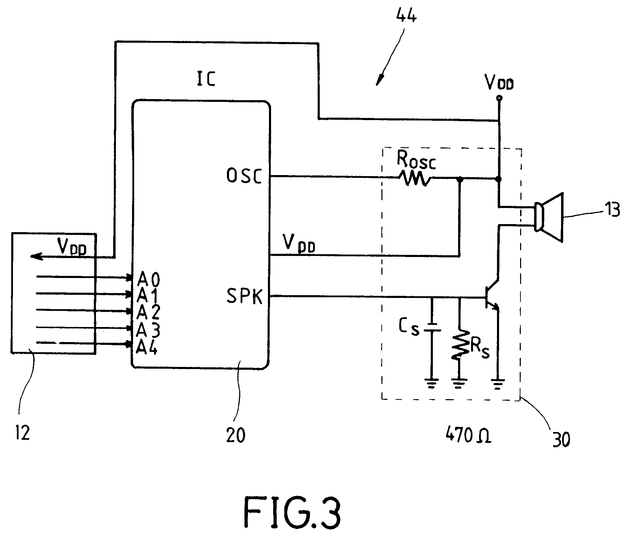

Further referring to Fig. 2, wherein the inside structure of the speaking means 1 is shown, the speaking means 1 has a casing 40 mounted to the book 2, as shown in Fig. 1, inside which casing 40 a power source 10, for example a battery set, is mounted to supply electrical power to a circuit board 42 on which a phonetic integrated circuit chip 20 (also see Fig. 3) is mounted and the speaker 13 which is in electrical connection with the circuit board 42 to convert the electrical signals supplied by the circuit board 42 to audio signals for reading out the contents of the book 2.

The phonetic integrated circuit chip 20 is preferably a custom made chip with memory built therein to store therein the content of the book 2. The memory is divided into a number of segments each of which stores the content of a page of the book 2 and is identified by an address associated with the page number of the page.

With reference to Figs. 2 and 3, the circuit board 42 has a circuit 44 formed thereon which is in electrical connection with the page number identifying arm 12 for detecting the page number code 21 formed on each page of the book 2. The detected page number code which represents the page number of the detected page is transferred to the phonetic integrated circuit chip 20 through address lines A0-A4 of the circuit 44. The page number signal sent to the phonetic integrated circuit chip 20 provides an address for the chip 20 to access a particular segment of the memory means built therein in which the content of the page associated therewith is stored so as to provide the content of the page associated with the detected page number code to the speaker 13 via an amplifying circuitry 30 of the circuit 44 to be converted into audio signals.

In Fig. 4, a page number code 24 is shown attached on a page of the book 2. The page number code is different in different page to indicate the page number of each page. To generate a signal representing the associated page number, each of the page number code is made of an electrical conductive material and has a power-in strip 26 located at a pre-determined position on the page and in connection with at least a signal-generating strip 28 in parallel therewith which signal-generating strip 28 identifies the page number.

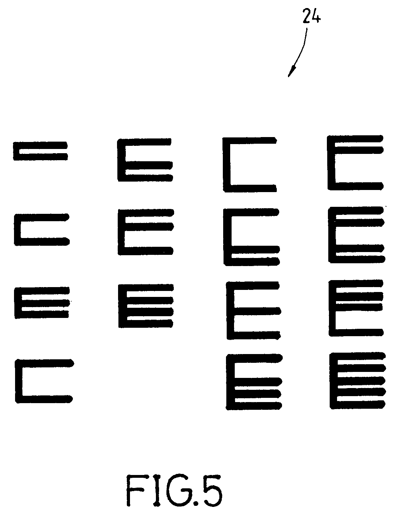

As shown in Fig. 5, in which examples of the page number code are listed, each of the page number codes comprises a power-in strip 26 and at least one signal-generating strip 28. As can be observed from Fig. 5, the location and number of the at least one signal-generating strip 28 vary to represent different page number. This is similar to the binary digit system. In Fig. 5, there are shown an example of at most five strips in total which indicates that at most four signal-generating strips 28 are provided. This gives in amount 2⁴=16 different page numbers. As known to the those familiar to the binary system, an eleven strip page number code gives 1024 different combinations of the strips and this is quite enough for most books.

Opposite to the strips of the page number code 24, a number of substantially parallel, conductive strips 14, six in the illustrated embodiment, is provided on the page number identifying arm 12 of which one is power line associated with the power-in strip 26 of the page number code 24 to apply electrical power thereto and the other strips are respectively in electrical connection with the address lines A0-A4. These strips are opposite to the signal-generating strips 28 of the page number code 24 so that when the page number identifying arm 12 is rotated to contact the page number code 24, electrical power is applied through the power line of the page number identifying arm 12 to the power-in strip 26 of the page number code 24 and then back to the other strips 14 of the page number identifying arm 12 via the signal-generating strips 28 of the page number code 24. By the electrical power flowing through a combination of the address lines A0-A4, an address signal is formed and applied to the phonetic integrated circuit chip 20. This allows the chip 20 to access the segment of the memory of the chip 20 associated with the page number identified by the address signal. The content of the identified segment of the memory is then broadcasted by the speaker 13 through the amplifying circuitry 30.

It is apparent that although the invention has been described in connection with the preferred embodiment, it is contemplated that those skilled in the art may make changes to certain features of the preferred embodiment without altering the basic concept of the invention and without departing from the spirit and scope of the invention as defined in the appended claims.

## Claims

1. A phonic book comprising a book having a number of pages to each of which a page number code representing the page number thereof is attached and speaking means which comprises a phonetic integrated circuit chip having memory means built therein, said memory means having a number of segments each storing the content of one of the pages of said book therein and identified by an address, a power source for supplying power to said phonetic integrated circuit chip, a speaker in electrical connection with said phonetic integrated circuit chip for converting electrical signals sent out by said chip into audio signals with the power supplied by said power source and a page number identifying arm which is in electrical connection with said phonetic integrated circuit chip and contactingly engageable with the page number code to provide an address signal to said chip in response to the page number code engaged thereby to allow said chip to read the memory segment associated with the page number and to apply electrical signal associated with the content stored in the memory segment to said speaker.

2. A phonic book as claimed in Claim 1, wherein an amplifying circuit is connected between said phonetic integrated circuit chip and said speaker.

3. A phonic book as claimed in Claim 1, wherein said page number codes are made of an electrical conductive material, wherein each of said page number codes comprises a first strip and at least a second strip in parallel with and in electrical connection with said first strip, said at least one second strip being disposed at different locations with respect to said first strip and having a different quantity for each different page of said book to indicate the different page number of said book, and wherein said page number arm comprises a third and at least a fourth electrically conductive strips with said third strip associated with said first strip and said at least one fourth strip in correspondence with said at least one second strip of said page number code so that when said page number identifying arm contacts said page number code, electrical power is applied to said first strip from said third strip and back to said fourth strips through a combination of said second strips to form the address signal associated with the page number code for providing to said phonetic integrated circuit chip.

4. A phonic book as claimed in Claim 1, wherein said page number identifying arm is movable relative to said page number code formed on each page of said book to allow turning of the pages.
